(19) Europäisches Patentamt

European Patent Office

Office européen des brevets

(11) **EP 0 688 078 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(51) Int Cl.⁶: **H02H 7/26**, H02H 1/04

(21) Anmeldenummer: **95201441.3**

(22) Anmeldetag: **01.06.1995**

(54) **Verfahren und Vorrichtung zum Schutz von Sammelschienen**

Busbar protection method and device

Procédé et dispositif de protection des barres collectrices

(84) Benannte Vertragsstaaten:
**AT CH DE FR GB LI SE**

(30) Priorität: **13.06.1994 DE 4420513**

(43) Veröffentlichungstag der Anmeldung:
**20.12.1995 Patentblatt 1995/51**

(73) Patentinhaber: **ASEA BROWN BOVERI AG
5400 Baden (CH)**

(72) Erfinder:
• **Bertsch, Joachim
D-74321 Bietigheim-Bissingen (DE)**
• **Peck, David, Dr.
CH-5442 Fislisbach (CH)**

(56) Entgegenhaltungen:
• **IEEE COMPUTER APPLICATIONS IN POWER, Bd. 6, Nr. 4, 1.Oktober 1993, Seiten 29-34, XP000414088 KUMAR A ET AL: "DIGITAL BUS-ZONE PROTECTION"**

## Beschreibung

### Technisches Gebiet

Die Erfindung bezieht sich auf das Gebiet der Schutztechnik.

Sie geht aus von einem Verfahren zum Schutz von Sammelschienen nach dem Oberbegriff des ersten Anspruchs. Im weiteren betrifft sie eine Vorrichtung zum Schutz von Sammelschienen.

### Stand der Technik

Solche Sammelschienenschutzsysteme werden bereits im Buch "Schutztechnik in Elektroenergiesystemen" von H. Ungrad et al., Springer Verlag 1991, auf den Seiten 182 ff. beschrieben.

Für ein Sammelschienen-Schutzsystem müssen die Ströme in den Abgängen der Sammelschiene mit Hilfe von Stromwandlern erfasst werden. Treten im Kurzschlussfall - innerhalb oder ausserhalb des Schutzbereiches der Sammelschiene - grosse Ströme auf, so können diese Ströme eine magnetische Kernsättigung der Stromwandler verursachen. Dies kann zu einer Fehlfunktion des Sammelschienen-Schutzsystems führen. In bisherigen analogen Sammelschienen-Schutzsystemen wurde die Stromwandlersättigung analog detektiert und das Schutzsystem blockiert.

Beim oben angegebenen System kann jedoch aufgrund der Stromwandlersättigung nicht zwischen einem externen und einem internen Fehler unterschieden werden.

Ein anderer Weg wird im Sammelschienenschutzsystem INX2 (siehe Brown Boveri Mitteilungen, Band 53, Nr. 4/5, Seiten 326-339) der Firma BBC begangen. Hier wird eine zum Strom proportionale Spannung mittels sog. Shapern in ein Rechtecksignal umgewandelt. Für jede Halbwelle des Stroms und damit für beide Richtungen ist ein Shaper vorgesehen. Um den Einfluss der Stromwandlersättigung zu verkleinern, ist den Shapern ein Integrator nachgeschaltet, welcher die digitalen Rechtecksignale während einer gewissen Zeit in seiner aktiven Lage hält. Mit dieser zusätzlichen Einrichtung wird erreicht, dass bei jeder Sättigung eines Hauptwandlers, auch wenn sie so stark ist, dass der Strom vor dem eigentlichen Nulldurchgang zusammenbricht, die Richtung der angefangenen Halbwelle so lange gespeichert wird, bis entweder die Messung beendet ist oder die nächste Halbwelle beginnt. Aus einem Vergleich der Richtungen bzw. Phasen der Abgangsströme kann nun ein Fehler detektiert und entschieden werden, ob ein interner oder ein externer Fehler vorliegt.

Bei diesem System handelt es sich um ein recht aufwendiges, analoges System, welches insbesondere nur für den Schutzalgorithmus des Phasenvergleichs anwendbar ist. Ein solches System wird im übrigen auch im eingangs genannten Lehrbuch auf den Seiten 194 ff. beschrieben.

### Darstellung der Erfindung

Aufgabe der vorliegenden Erfindung ist es deshalb, ein Verfahren und eine Vorrichtung zum Schutz von Sammelschienen anzugeben, bei welchem auch unter Beeinflussung der Sättigung in den Stromwandlern zuverlässig externe und interne Fehler detektiert und unterschieden werden können. Insbesondere soll das Verfahren numerisch sein und für verschiedene Schutzalgorithmen verwendet werden können.

Diese Aufgabe wird bei einem Verfahren der eingangs genannten Art durch die Merkmale des ersten Anspruchs bzw. durch eine Vorrichtung nach Anspruch 9 gelöst.

Kern des erfindungsgemässen Verfahrens ist es also, dass die Maximalwerte der Ströme in den Abgängen bestimmt werden und diese für eine gewisse Haltezeit gehalten werden.

Die Stromwerte können dabei entweder auf dem Maximalwert selbst oder auf einem dazu proportionalen Wert gehalten werden. Die derart korrigierten Stromverläufe werden anschliessend vektoriell weiterverarbeitet.

Anhand dieser Stromverläufe wird mittels verschiedener Schutzalgorithmen ein Fehlersignal bestimmt. Als Schutzalgorithmus werden der Stromvergleich mit Stromstabilisierung sowie der Phasenvergleich bevorzugt.

Die erfindungsgemässe Vorrichtung umfasst pro Abgang eine Feldeinheit mit einem Maximalwertdetektor und Verlängerungsmittel mittels welcher das oben erläuterte Maximalwertsverlängerungs-Verfahren durchgeführt werden kann.

Weitere Ausführungsbeispiele ergeben sich aus den Unteransprüchen.

Der Vorteil des erfindungsgemässen Aufbaus besteht insbesondere darin, dass die störenden Einflüsse der Stromwandlersättigung unterdrückt werden können. Dadurch erhält man ein von der Stromwandlersättigung unabhängige Funktionalität des Schutzsystems. Insbesondere wird bei externen Fehlern zuverlässig eine Fehlauslösung vermieden. Zudem eignet sich das Stromschienenschutzsystem nach der Erfindung auch für verschiedene Schutzalgorithmen.

**Kurze Beschreibung der Zeichnungen**

Nachfolgend wird die Erfindung anhand von Ausführungsbeispielen im Zusammenhang mit den Zeichnungen näher erläutert.

Es zeigen:

**Fig. 1** Den zeitlichen Verlauf eines unverzerrten und eines durch Stromwandlersättigung verzerrten und Abgangsstromsignales sowie die erfindungsgemässe Verlängerung des Maximalwertes;

**Fig. 2** Den zeitlichen Verlauf eines unverzerrten und eines durch Stromwandlersättigung verzerrten, verlängerten Abgangsstromsignales sowie die erfindungsgemässe Verlängerung und Überhöhung des Maximalwertes;

**Fig. 3** Ein Blockschaltbild einer erfindungsgemässen Schutzvorrichtung;

**Fig. 4** Ein Blockschaltbild eines Teils der Feldeinheit.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

**Wege zur Ausführung der Erfindung**

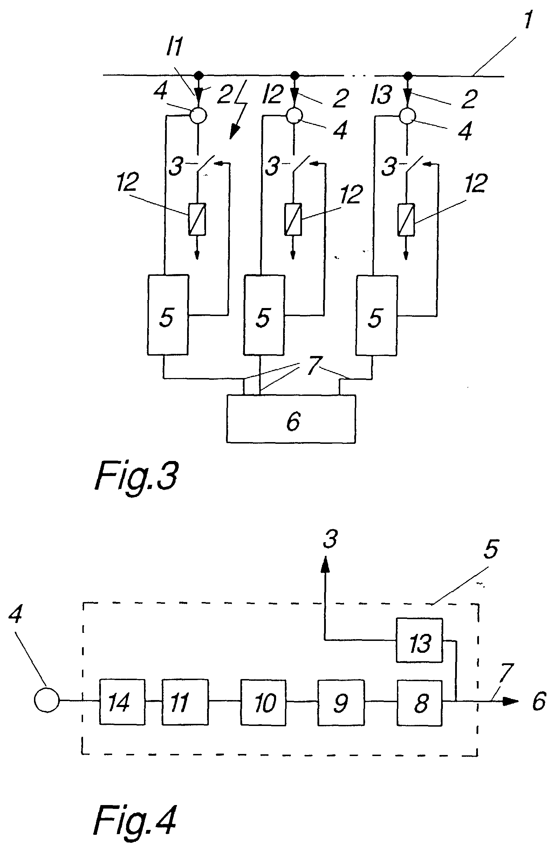

**Figur 3** zeigt ein Blockschaltbild einer erfindungsgemässen Schutzeinrichtung. Mit 1 ist eine Sammelschiene bezeichnet, welche k>=2 (dargestellt sind 3) Abgänge 2 aufweist. Jeder Abgang 2 umfasst eine Last 12, ein Verbraucher oder ein Erzeuger, welche über einen Schalter 3 an die Sammelschiene 1 angeschlossen ist. Zwischen dem Schalter 3 und der Schiene 1 ist zudem ein Stromwandler 4 vorgesehen.

Im Stromwandler 4 werden die Stromverläufe I1, I2, I3, allgemein Ik durch die k Abgänge 2 bestimmt. Tritt irgendwo ein Fehler, d.h. ein Kurzschluss auf (angedeutet durch den Pfeil), so steigen die Ströme Ik innert kurzer Zeit an und ändern u.U. ihre Richtung oder ihre Phasenlage. Ziel des Sammelschienenschutzes ist es, im Falle eines internen Fehlers, d.h. eines Kurzschlusses im Bereich der überwachten Sammelschiene 1, die Abgänge 2 so schnell wie möglich mittels der Schalter 3 abzuhängen, um Schäden und Betriebsunterbrüche möglichst gering zu halten.

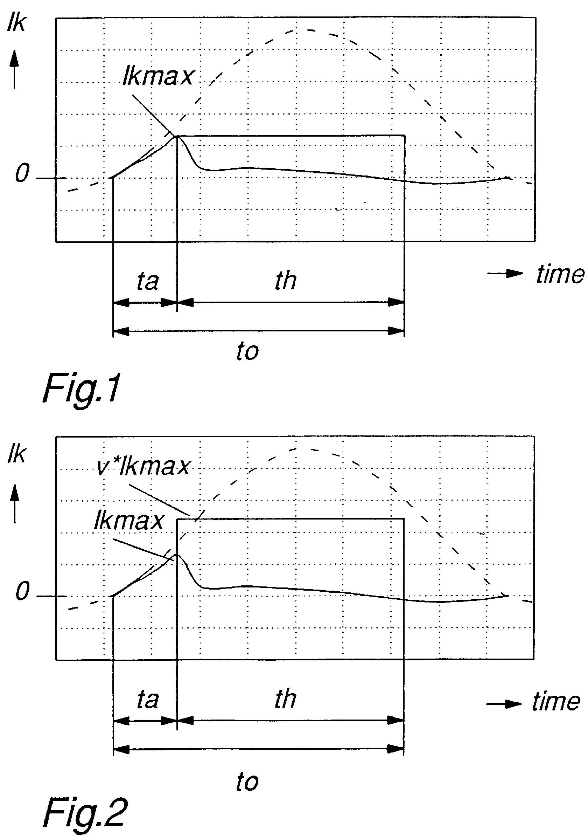

Da die Ströme Ik im Falle eines Fehlers sehr gross werden, kann es in den Stromwandlern 4 zu magnetischer Kernsättigung kommen. Dadurch verläuft der Strom nicht mehr sinusförmig, wie in den Figuren 1 und 2 gestrichelt dargestellt, sondern nimmt ein Maximum an und klingt wieder ab (ausgezogen dargestellt).

Um die Ströme der verschiedenen Abgänge miteinander vergleichen zu können, muss die Weiterverarbeitung der Ströme Ik vektoriell erfolgen. Zu diesem Zweck werden die vektoriellen Grundfrequenzkomponenten I̲k der Ströme Ik bestimmt. Dies wird vorzugsweise mit einem Fourierfilter vorgenommen. Aus der Grundfrequenzkomponente I̲k kann aber die Stromwandlersättigung nicht erkannt und die Einflüsse deshalb auch nicht minimiert werden.

Bei Sättigung der Stromwandler weichen Phase und Amplitude der Grundfrequenzkomponente I̲k der Ströme Ik stark von den unverzerrten Verläufen ab. Ohne zusätzliche Stabilisierung kann dies gegebenenfalls zu Fehlauslösungen des Schutzsystems führen. Ziel des erfindungsgemässen Verfahren bzw. der Vorrichtung ist deshalb, die Stromwerte numerisch zu stabilisieren.

Dies wird dadurch erreicht, dass das Maximum Ikmax der Abgangsströme Ik bestimmt wird und diese Maximum Ikmax für eine gewisse Haltezeit th verlängert wird (siehe Figur 1). Wird dieses Verfahren bei einem numerische Sammelschienenschutz vor der Bestimmung der Grundfrequenzkomponente I̲k angewendet, so kann der Einfluss der Stromwandlersättigung auf das Funktionieren des Schutzsystems wesentlich verringert werden.

Für die Verlängerung des Maximums Ikmax kann der Stromwert entweder auf seinem Maximalwert Ikmax selber ("einfache Maximaverlängerung", Figur 1) oder auf einem dazu proportionalen Wert ("dynamische Maximaverlängerung, Figur 2) gehalten werden.

Beiden Varianten ist gemeinsam, dass die Haltezeit th als Differenz einer von aussen vorgegeben maximalen Haltezeit to und dem Zeitpunkt des Auftretens des Maximums ta berechnet wird. Versuche haben ergeben, dass die optimale maximale Haltezeit to bei einem 50 Hz System 12.5 ms beträgt. Falls ein gültiges Maximum Ikmax detektiert worden ist, so wird dieser Wert während der Zeitspanne th gehalten, so dass eine Art Rechtecksignal entsteht.

Bei der dynamischen Maximaverlängerung wird der Maximalwert Ikmax auf einem dazu proportionalen Wert gehalten. Der Proportionalitätsfaktor v berechnet sich nach der Formel

$$v = \frac{1}{\sin(\frac{2\pi\, \text{ta}}{\text{To}})}$$

wobei ta dem Zeitpunkt des Auftretens des Maximums Ikmax und To der Periode der Netzfrequenz entspricht.

Nach der Verlängerung der Maximalwerte nach den oben beschriebenen Verfahren werden die Stromverläufe Ik vektoriell weiterverarbeitet, d.h. nur noch die Grundfrequenzkomponente $\underline{Ik}$ wird berücksichtigt.

Im folgenden werden zwei bevorzugte Schutzalgorithmen besprochen mittels welchen aus den Stromverläufen $\underline{Ik}$ ein Fehlersignal erzeugt werden kann.

Beim Stromvergleichsverfahren mit Stromstabilisierung wird ein Stabilisierungsfaktor kst berechnet, wobei kst dem Quotienten der geometrischen Summe der Stromverläufe und der arithmetischen Summe der Stromverläufe entspricht. Mit Formeln ausgedrückt:

$$kst = \frac{|\Sigma \; \underline{Ik} \; |}{\Sigma \; |\underline{Ik}|} ,$$

k = 1.. Anzahl Abgänge

Ik = Stronverlauf im Abgang k

Im internen Fehlerfall erreicht kst maximal den Wert 1, im externen Fehlerfall den minimalen Wert Null. Mit Hilfe eines Schwellwertes kann zwischen einem externen und einem internen Fehler unterschieden werden. Bei Verfahren ohne Maximaverlängerung überlappen die Bereiche von kst für einen internen bzw. externen Fehler, so dass einen eindeutige Unterscheidung nicht möglich ist. Ein Mass dafür, wie deutlich interne Fehler von externen Fehlern unterschieden werden können, ist die Differenz dkst zwischen dem minimalen kst-Faktor für interne Fehler und dem maximalen kst-Wert für externe Fehler.

In der folgenden Tabelle sind Werte aufgeführt, welche während Versuchen erhalten wurden, und es wird klar ersichtlich, welchen Vorteil bezüglich der Unterscheidung von internen und externen Fehlern das erfindungsgemässe Verfahren bringt.

| Verfahren | dkst | max. kst bei ext. Fehlern | min. kst bei int. Fehlern |
|---|---|---|---|
| ohne Maximaverlängerung | -0.12 | 0.91 | 0.79 |
| Einf. Maximaverlängerung | 0.17 | 0.79 | 0.96 |
| Dyn. Maximaverlängerung | 0.35 | 0.61 | 0.96 |

Bei dem Verfahren ohne Maximaverlängerung erhält man ein negatives dkst, d.h. die Bereiche von kst für externe und interne Fehler überlappen und eine fehlerfreie Unterscheidung ist nicht möglich. Bei der dynamische Maximaverlängerung ist dkst ungefähr doppelt so gross wie bei der einfachen. Das dynamische Verfahren ist also eindeutig robuster und gegenüber Sättigungseinflüssen wesentlich unempfindlicher.

Ein zweiter, bevorzugter Schutzalgorithmus ist der Phasenvergleichsalgorithmus. Dabei wird aus den Stromverläufen $\underline{Ik}$ der einzelnen Abgänge die Stromrichtung anhand der Phasenlage $\Phi k$ bestimmt. Aus den Differenzen der Phasenlagen $\Phi k$ kann nun entschieden werden, ob ein externer oder ein interner Fehler vorliegt. Bei einem System mit zwei Abgängen liegt ein interner Fehler vor, falls der Betrag der Phasendifferenz der Ströme kleiner als $\pi/2$ ist. Liegt der Betrag der Differenz über diesem Wert, so ist der Fehler extern.

Zum Schluss wird noch anhand der Figuren 3 und 4 erläutert, welche Vorrichtungen für ein erfindungsgemässes Schutzsystem notwendig sind. Von einer Sammelschiene 1 zweigen z.B. drei Abgänge 2 ab, in welchen die Ströme I1..I3 fliessen. Diese Stromverläufe, allgemein Ik, werden in den Stromerfassungsmitteln erfasst. Die Stromerfassungsmittel können z.B. einen Stromwandler 4 und einen A/D-Wandler 11 umfassen. Der A/D-Wandler ist für jeden Abgang 2 in einer Feldeinheit 5 vorgesehen und mit dementsprechenden Stromwandler 4 verbunden. Dem A/D_Wandler 11 ist ein Tiefpassfilter 14, welches als Anti-Aliasingfilter wirkt, vorgeschaltet. Nachgeschaltet ist dem A/D-Wandler 11 ein Maximalwertdetektor 10, in welchem der Maximalwert Ikmax bestimmt wird. Dieser Wert wird in den Verlängerungsmitteln 9 während der Haltezeit th gehalten. Den Verlängerungsmitteln 9 ist vorzugsweise ein Fourierfilter 8 zur Bestimmung der vektoriellen Grundfrequenzkomponente $\underline{Ik}$ nachgeschaltet. Die so aufbereiteten Stromverläufe $\underline{Ik}$ werden von den Feldeinheiten 5 über einen Prozessbus 7 einer Zentraleinheit 6 zugeführt, in welcher das Fehlersignal nach einem der oben vorgestellten Schutzalgorithmen bestimmt wird. Über den Prozessbus 7 werden die Feldeinheiten 5 von der Zentraleinheit 6 beim Vorliegen eines internen Fehlers angewiesen, die Schalter 3 zu öffnen. Dies geschieht mittels einer in jeder Feldeinheit 5 vorgesehen Steuereinheit 13.

Insgesamt steht also mit der Erfindung ein Verfahren bzw. eine Vorrichtung zum Schutz von Sammelschienen zur Verfügung, welches unabhängig von Sättigungserscheinungen im Stromwandler zuverlässig externe und interne Fehler detektieren und unterscheiden kann und zudem für verschiedene Schutzalgorithmen eingesetzt werden kann.

**Bezeichnungsliste**

1     Sammelschiene
2     Abgang
3     Schalter
4     Stromwandler
5     Feldeinheit
6     Zentraleinheit
7     Prozessbus
8     Fourierfilter
9     Verlängerungsmittel
10    Maximalwertdetektor
11    A/D-Wandler
12    Last
13    Steuereinheit
14    Tiefpassfilter

I1..3    Abgangsströme
Ik       Abgangsstrom des Abgangs k
$\underline{Ik}$      vektorieller Abgangsstrom
Ikmax   Abgangsstrommaximalwert
th       Haltezeit
to       maximale Haltezeit
ta       Zeitpunkt des Auftretens des Maximums Ikmax
To      Periode der Netzfrequenz
v        Proportionalitätsfaktor

**Patentansprüche**

1.   Verfahren zum Schutz von Sammelschienen (1) mit k>=2 Abgängen (2), bei welchem Verfahren

a) die Stromverläufe Ik in den Abgängen (2) bestimmt werden;
b) anhand der vektoriellen Stromverläufe $\underline{Ik}$ ein Fehlersignal bestimmt wird;

dadurch gekennzeichnet, dass

c) das Maximum Ikmax der Stromverläufe Ik bestimmt wird;
d) die Stromverläufe Ik nach der Bestimmung des Maximums Ikmax während einer bestimmten Haltezeit th auf diesem Maximum Ikmax oder auf einem dazu proportionalen Wert gehalten werden und anhand der derart korrigierten Stromverläufe das Fehlersignal bestimmt wird.

2.   Verfahren nach Anspruch 1, dadurch gekennzeichnet, dass die Haltezeit th nach th = to-ta berechnet wird, wobei ta dem Zeitpunkt des Auftretens des Maximums Ikmax und to einem von aussen vorgegebenen maximalen Haltezeitspanne entspricht.

3.   Verfahren nach Anspruch 1 oder 2, dadurch gekennzeichnet, dass die Abgangsstromverläufe Ik während der Haltezeit th auf einem zum entsprechendem Maximum Ikmax proportionalen Wert gehalten werden.

4.   Verfahren nach Anspruch 3, dadurch gekennzeichnet, dass die Maximalwerte Ikmax mit dem Faktor

$$v = \frac{1}{\sin(\frac{2\pi\ ta}{To})}$$

multipliziert werden, wobei ta der Zeit des Auftretens des Maximalwertes Ikmax und To der Grundperiode der Netzfrequenz entspricht.

**5.** Verfahren nach einem der Ansprüche 1 bis 4, dadurch gekennzeichnet, dass als Fehlersignal ein Stabilisierungsfaktor kst berechnet wird, welcher einem Quotienten der geometrischen Summe der vektoriellen Stromverläufe $\underline{Ik}$ und der arithmetischen Summe der vektoriellen Stromverläufe $\underline{Ik}$ entspricht.

**6.** Verfahren nach Anspruch 5, dadurch gekennzeichnet, dass anhand des Wertes von kst bestimmt wird, ob ein interner Fehler oder ein externer Fehler vorliegt, dass insbesondere beim Unterschreiten eines unteren Grenzwertes von kst auf einen externen Fehler und beim Überschreiten eines oberen Grenzwertes auf einen internen Fehler geschlossen wird.

**7.** Verfahren nach einem der Ansprüche 1 bis 4, dadurch gekennzeichnet, dass anhand der vektoriellen Stromverläufe $\underline{Ik}$ je eine Phaseninformation $\Phi k$ berechnet wird und anhand der Phaseninformationen $\Phi k$ bestimmt wird, ob ein interner oder ein externer Fehler vorliegt.

**8.** Verfahren nach einem der vorstehenden Ansprüche, dadurch gekennzeichnet, dass zur Bestimmung der vektoriellen Stromverläufe $\underline{Ik}$ ein Fourierfilter verwendet wird.

**9.** Vorrichtung zum Schutz einer Sammelschiene (1), an welche k>=2 Abgänge (2) über je einen Schalter (3) angeschlossen sind, umfassend

a) pro Abgang (2) eine Stromerfassungsvorrichtung zur Erfassung der Stromverläufe Ik in den Abgängen;
b) je eine Feldeinheit (5), welche mit den Schaltern (3) verbunden sind und diese nach Massgabe eines Fehlersignals öffnen;
c) eine Zentraleinheit (6), welche über einen Prozessbus (7) mit den Feldeinheiten (5) verbunden ist und in welcher aus den vektoriellen Stromverläufen $\underline{Ik}$ das Fehlersignal bestimmt wird;

dadurch gekennzeichnet, dass

d) in den Feldeinheiten (5) Verlängerungsmittel (9) und Maximalwertdetektoren (10) vorgesehen sind, welche den Maximalwert Ikmax der Stromverläufe Ik bestimmen und diesen Maximalwert Ikmax oder einen dazu proportionalen Wert für eine bestimmte Haltezeit th halten, und anhand der derart korrigierten Stromverläufe das Fehlersignal bestimmt wird.

**10.** Vorrichtung nach Anspruch 8, dadurch gekennzeichnet, dass in den Feldeinheiten (5) ein Fourierfilter (8) zur Bestimmung der vektoriellen Stromverläufe $\underline{Ik}$ vorgesehen sind, wobei das Filter (8) den Verlängerungsmitteln (9) nachgeschaltet ist.

**Claims**

**1.** Method for protecting busbars (1) having k>=2 outgoers (2), in which method

a) the current characteristics Ik are determined in the outgoers (2);
b) a fault signal is determined with the aid of the vectorial current characteristics $\underline{Ik}$;

characterized in that

c) the maximum Ikmax of the current characteristics Ik is determined; and
d) after the determination of the maximum Ikmax, the current characteristics Ik are held at this maximum Ikmax, or at a value propertional thereto, during a specific hold time th and the fault signal is determined with the aid of the current characteristics corrected in this manner.

**2.** Method according to Claim 1, characterized in that the hold time th is calculated in accordance with th = tota, ta corresponding to the instant of the occurrence of the maximum Ikmax, and to corresponding to a maximum hold period prescribed from outside.

**3.** Method according to Claim 1 or 2, characterized in that the outgoer current characteristics Ik are held during the hold time th at a value proportional to the corresponding maximum Ikmax.

4. Method according to Claim 3, characterized in that the maximum values Ikmax are multiplied by the factor

$$v = \frac{1}{\sin(\frac{2\pi\ ta}{To})}$$

ta corresponding to the time of the occurrence of the maximum value Ikmax, and To corresponding to the fundamental period of the system frequency.

5. Method according to one of Claims 1 to 4, characterized in that there is calculated as the fault signal a stabilization factor kst which corresponds to a quotient of the geometrical sum of the vectorial current characteristics $\underline{Ik}$ and the arithmetic sum of the vectorial current characteristics $\underline{Ik}$.

6. Method according to Claim 5, characterized in that it is determined with the aid of the value of kst whether an internal fault or an external fault is present, in that in particular upon undershooting of a lower limiting value of kst, it is concluded that there is an external fault and, upon overshooting of an upper limiting value, it is concluded that there is an internal fault.

7. Method according to one of Claims 1 to 4, characterized in that, with the aid of the vectorial current characteristics $\underline{Ik}$, one item $\Phi k$ of phase information is calculated and it is determined with the aid of the item $\Phi k$ of phase information whether an internal fault or an external one is present.

8. Method according to one of the preceding claims, characterized in that a Fourier filter is used to determine the vectorial current characteristics Ik.

9. Device for protecting a busbar (1) to which k>=2 outgoers (2) are connected via in each case one switch (3), comprising

a) per outgoer (2), a current detecting device for detecting the current characteristics Ik in the outgoers;
b) one field unit (5) in each case, which field units are connected to the switches (3) and open the latter in accordance with a fault signal;
c) a central unit (6) which is connected via a process bus (7) to the field units (5) and in which the fault signal is determined from the vectorial current characteristics Ik;

characterized in that

d) there are provided in the field units (5) extension means (9) and maximum value detectors (10) which determine the maximum value Ikmax of the current characteristics Ik and hold this maximum value Ikmax, or a value proportional thereto, for a specific hold time th and the fault signal is determined with the aid of the current characteristics corrected in this manner.

10. Device according to Claim 8 [sic], characterized in that a Fourier filter (8) is provided in each field unit (5) in order to determine the vectorial current characteristics $\underline{Ik}$, the filter (8) being connected downstream of the extension means (9).

**Revendications**

1. Méthode de protection des rails collecteurs (1) munis de k >= 2 sorties (2), méthode avec laquelle

a) sont définis les signaux de courant Ik dans les sorties (2) ;
b) un signal de défaut est défini à partir des signaux de courant vectoriels $\underline{Ik}$ ;

caractérisée par le fait

c) que le maximum Ikmax des signaux de courant Ik est déterminé ;
d) que les signaux de courant Ik sont maintenus à ce maximum Ikmax ou à une valeur qui lui est proportionnelle pendant un temps de maintien th donné après la détermination du maximum Ikmax et le signal de défaut est défini sur la base des signaux de courant ainsi corrigés.

2. Méthode selon la revendication 1, caractérisée par le fait que le temps de maintien th est calculé d'après la formule th = to-ta, ta désignant le moment d'apparition du maximum Ikmax et to désignant un temps de maintien maximum donné de l'extérieur.

3. Méthode selon la revendication 1 ou 2, caractérisée par le fait que les signaux de courant de sortie Ik sont maintenus à une valeur proportionnelle au maximum Ikmax pendant le temps de maintien th.

4. Méthode selon la revendication 3, caractérisée par le fait que les valeurs maximales Ikmax sont multipliées par le facteur

$$v = \frac{1}{\sin(\frac{2\pi\, ta}{To})}$$

ta correspondant au moment d'apparition de la valeur maximale Ikmax et To à la période de base de la fréquence du secteur.

5. Méthode selon l'une des revendications 1 à 4, caractérisée par le fait que comme signal de défaut on calcule un facteur de stabilisation kst qui correspond aux quotients de la somme géométrique des signaux de courant vectoriels Ik et de la somme arithmétique des signaux de courant vectoriels Ik.

6. Méthode selon la revendication 5, caractérisée par le fait que cette valeur de kst permet de déterminer s'il y a présence d'un défaut interne ou externe, notamment qu'il s'agit d'un défaut externe si kst est inférieur à une valeur de seuil inférieur et d'un défaut interne si kst est supérieur à une valeur de seuil supérieur.

7. Méthode selon l'une des revendications 1 à 4, caractérisée par le fait qu'une information de phase $\phi$k est calculée à partir de chacun des signaux de courant vectoriels Ik et que cette information de phase $\phi$k permet de déterminer s'il s'agit d'un défaut interne ou externe.

8. Méthode selon l'une des revendications précédentes, caractérisée par le fait qu'un filtre de Fourier est employé pour déterminer les signaux de courant vectoriels Ik.

9. Dispositif de protection d'un rail collecteur (1) sur lequel sont raccordées k >= 2 sorties (2) par le biais d'un contacteur (3), comprenant

a) pour chaque sortie, un dispositif de détection du courant destiné à détecter les signaux de courant Ik dans les sorties ;
b) des modules de terrain (5) qui sont reliés aux contacteurs (3) et qui ouvrent ceux-ci en présence d'un signal de défaut ;
c) une unité centrale (6) qui est reliée aux modules de terrain (5) par le biais d'un bus de processus (7) et dans laquelle est défini le signal de défaut à partir des signaux de courant vectoriels Ik ;

caractérisé par le fait que

d) des moyens de prolongation (9) et des détecteurs de valeur maximale (10) sont prévus dans les modules de terrain (5), lesquels déterminent la valeur maximale Ikmax des signaux de courant Ik et maintiennent cette valeur maximale Ikmax ou une valeur qui lui est proportionnelle pendant un temps de maintien th donné et le signal de défaut est défini sur la base des signaux de courant ainsi corrigés.

10. Dispositif selon la revendication 8, caractérisé par le fait qu'un filtre de Fourier (8) est prévu dans les modules de terrain (5) pour déterminer les signaux de courant vectoriels Ik, le filtre (8) étant branché en aval des moyens de prolongation (9).

**Fig.1**

**Fig.2**

9

Fig.3

Fig.4